(19) Europäisches Patentamt
European Patent Office
Office européen des brevets

(11) **EP 3 620 982 B1**

(12) **EUROPEAN PATENT SPECIFICATION**

(45) Date of publication and mention of the grant of the patent:
**06.12.2023  Bulletin 2023/49**

(21) Application number: **19195094.8**

(22) Date of filing: **03.09.2019**

(51) International Patent Classification (IPC):
**G06V 10/762** *(2022.01)*     **G06V 10/771** *(2022.01)*

(52) Cooperative Patent Classification (CPC):
**G06F 18/211; G06V 10/762; G06V 10/771**

(54) **SAMPLE PROCESSING METHOD AND DEVICE**

PROBENVERARBEITUNGSVERFAHREN UND -VORRICHTUNG

PROCÉDÉ ET DISPOSITIF DE TRAITEMENT D'ÉCHANTILLONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018  CN 201811043185**

(43) Date of publication of application:
**11.03.2020  Bulletin 2020/11**

(73) Proprietor: **Baidu Online Network Technology (Beijing) Co., Ltd.**
**Beijing 100085 (CN)**

(72) Inventors:
• **ZHAO, Min**
  **BEIJING, 100085 (CN)**
• **CHENG, Jianyi**
  **BEIJING, 10085 (CN)**
• **QIN, Huapeng**
  **BEIJING, 100085 (CN)**

(74) Representative: **Studio Torta S.p.A.**
**Via Viotti, 9**
**10121 Torino (IT)**

(56) References cited:
• XU ET AL: "Integrated patch model: A generative model for image categorization based on feature selection", PATTERN RECOGNITION LETTERS, ELSEVIER, AMSTERDAM, NL, vol. 28, no. 12, 1 September 2007 (2007-09-01), pages 1581-1591, XP022134113, ISSN: 0167-8655, DOI: 10.1016/J.PATREC.2007.03.016

• MARCHENKO YELIZAVETA ET AL: "Semi-supervised annotation of brushwork in paintings domain using serial combinations of multiple experts", ACM MULTIMEDIA 2006 & CO-LOCATED WORKSHOPS : OCTOBER 23 - 27, 2006, SANTA BARBARA, CALIFIRNIA, USA ; MM '06 ; PROCEEDINGS, ACM PRESS, [NEW YORK, NY], 23 October 2006 (2006-10-23), pages 529-538, XP058233329, DOI: 10.1145/1180639.1180752 ISBN: 978-1-59593-447-5

• JAIN ARPIT ET AL: "Representing Videos Using Mid-level Discriminative Patches", IEEE COMPUTER SOCIETY CONFERENCE ON COMPUTER VISION AND PATTERN RECOGNITION. PROCEEDINGS, IEEE COMPUTER SOCIETY, US, 23 June 2013 (2013-06-23), pages 2571-2578, XP032493120, ISSN: 1063-6919, DOI: 10.1109/CVPR.2013.332 [retrieved on 2013-10-02]

• MICHAEL RIEGLER ET AL: "From Annotation to Computer-Aided Diagnosis", ACM TRANSACTIONS ON MULTIMEDIA COMPUTING COMMUNICATIONS ANDAPPLICATIONS, ASSOCIATION FOR COMPUTING MACHINERY, US, vol. 13, no. 3, 31 May 2017 (2017-05-31), pages 1-26, XP058372944, ISSN: 1551-6857, DOI: 10.1145/3079765

• Saurabh Singh ET AL: "Unsupervised Discovery of Mid-Level Discriminative Patches" In: "International Conference on Financial Cryptography and Data Security", 14 May 2012 (2012-05-14), Springer, Berlin, Heidelberg 032548, XP055249243, ISBN: 978-3-642-17318-9 vol. 7573, pages 73-86, DOI: 10.1007/978-3-642-33709-3_6, * the whole document *

**(Cont. next page)**

EP 3 620 982 B1

- **LIU KAI ET AL: "Iterative samples labeling for sketch recognition", MULTIMEDIA TOOLS AND APPLICATIONS, KLUWER ACADEMIC PUBLISHERS, BOSTON, US, vol. 76, no. 10, 30 June 2016 (2016-06-30) , pages 12819-12852, XP036242101, ISSN: 1380-7501, DOI: 10.1007/S11042-016-3700-Z [retrieved on 2016-06-30]**

**Description**

## TECHNICAL FIELD

Embodiments of the present invention mainly relate to a field of computer technology, and more particular to a sample processing method, a sample processing device, and a computer readable storage medium.

## BACKGROUND

With popularity of artificial intelligence, a technology of machine learning becomes more and more widely used. The machine learning is to use a statistical technique to provide a computer system with an ability of data "learning" (e.g., an ability of incrementally improving the performance of specific tasks). Supervised learning is a type of machine learning task that is based on a sample input-output pair to learn a function for mapping an input to an output. In the supervised learning, is the function may be inferred from annotated training data (i.e., annotated samples) consisting of a set of training data.

The task of the supervised learning task often requires large-scaled and high-precision annotated samples. Quality of the annotated samples may affect a learning effect of the supervised learning. Due to a high cost and inefficiency of a manner of manually annotating samples, a manner of mechanically and automatically annotating samples may be employed in many applications. The manner of mechanically and automatically annotating samples may annotate large-scaled data, but may have a lower accuracy than the manner of manually annotating samples, which limits a training effect of the machine learning model. Therefore, an efficient sample filtering and screening method may be needed to improve a quality of annotated samples for the machine learning, particularly the supervised learning. Document D1 ("Integrated patch model: A generative model for image categorization based on feature selection" by XU ET AL) discloses a generative model for image categorization based on feature selection. The image classification is mainly used for keyword based image retrieval. An important step before establishing an image categorization model is to extract common features of images. The features used in the categorization model are generated from two stages: salient patch selection and feature extraction.

Document D2 ("Semi-supervised annotation of brushwork in paintings domain using serial combinations of multiple experts" by Marchenko Yelizaveta et al.) discloses a semi-supervised annotation of brushwork in paintings domain using serial combinations of multiple experts.

Document D3 ("Representing Videos Using Mid-Level Discriminative Patches" by Jain Arpit et al.) discloses representing videos using mid-level discriminative patches.

## SUMMARY

According to exemplary embodiments of the present invention, there is provided a sample processing method.

In a first aspect of the present invention, there is provided a sample processing method. The method includes determining a feature representation of samples comprised in a sample set, each of the samples having a pre-annotated category; performing a clustering on the samples in the sample set to obtain a plurality of clusters based on the feature representation, each cluster comprising one or more samples; determining a purity of each cluster based on categories of samples comprised in the cluster, the purity indicating a chaotic degree of the categories of samples comprised in the cluster; and determining filtered samples by employing different post-processing strategies for each cluster based on the purity of each cluster, wherein determining the filtered samples by employing different post-processing strategies for each cluster based on the purity of each cluster comprises: determining whether the purity of the cluster is higher than a threshold purity; in response to determining that the purity is higher than the purity threshold, determining whether the categories of the samples comprised in the cluster are same to each other; in response to determining that the categories of the samples comprised in the cluster are same to each other, determining all of the samples comprised in the cluster as the filtered samples; in response to determining that the categories of the samples comprised in the cluster are different, determining the number of samples for each category; determining a target category having a maximal number of samples for the cluster based on the number of samples for each category; determining samples of the target category as the filtered samples; and in response to determining that the purity is lower than a purity threshold, determining a ratio of the number of samples comprised in the cluster to the number of samples comprised in the sample set; in response to determining that the ratio exceeds a ratio threshold, performing a further clustering on the samples comprised in the cluster to obtain a result of the clustering, the result of the clustering comprising one or more sub-clusters of the samples comprised in the cluster, wherein, compared with the clustering performed on the sample set, the clustering is performed on the samples comprised in the cluster with different clustering algorithms or with different clustering parameters or with a combination thereof; and repeating the step of determining the purity and the corresponding post-processing strategy for each of the one or more sub-clusters, to determine the filtered samples from the sub-clusters.

## BRIEF DESCRIPTION OF THE DRAWINGS

The above and additional features, aspects and advantages of embodiments of the present invention will become apparent and more readily appreciated from the following descriptions made with reference to the drawings. In the drawings, several embodiments of the present disclosure are illustrated in an example way instead of a limitation way, in which:

Fig. 1 is a schematic diagram illustrating an exemplary scene for implementing embodiments of the present disclosure.
Fig. 2 is a flowchart illustrating a sample processing method according to embodiments the present disclosure.
Fig. 3 is a schematic diagram illustrating a neural network for determining a feature representation according to embodiments of the present disclosure.
Fig. 4 is a schematic diagram illustrating a gathering result according to embodiments of the present disclosure.
Fig. 5 is a flowchart illustrating a determination of a sample filtered according to embodiments of the present disclosure.
Fig. 6 is a block diagram illustrating a sample processing device according to embodiments of the present disclosure.
Fig. 7 is a block diagram illustrating a computing device for implementing embodiments of the present disclosure.

## DETAILED DESCRIPTION

Embodiments of the present invention will be described in more detail below with reference to accompanying drawings. Although some embodiments of the present invention are illustrated in the drawings, it should be understood, the present invention may be embodied in various forms and should not be construed as limited to embodiments set forth herein.

In the description of the embodiments of the present invention the term "comprises" and the like are understood as open-ended, i.e., "including but not limited to". The term "based on" should be understood as "based at least in part". The term "one embodiment" or "an embodiment" should be understood to mean "at least one embodiment." The terms "first," "second," and the like may refer to different or identical objects. Other explicit and implicit definitions may also be included Embodiments explicitly stated hereafter to be "embodiments of the present disclosure" are all embodiments within the scope of the present invention as defined in the appended claims. below

In the description of embodiments of the present disclosure, as understood by those skilled in the art, the term "clustering" may refer to a process of attempting to divide samples included in a sample set into subsets that are generally disjoint. Each subset may be called as a "cluster." Each cluster may have some potential concepts. It should be noted that, although the samples included in the sample set may have pre-annotated categories in the present disclosure, the categories may be not used in the clustering process. In addition, in some cases, a resulting cluster (which may be considered as another sample set) may be further clustered to obtain subsets each including one or more samples included in the resulting cluster (also called as a sub-cluster).

In the description of embodiments of the present disclosure, as understood by those skilled in the art, the term "neural network" may refer to a broadly parallel interconnected network composed of adaptive simple units. Organization of the neural network may simulate an interactive behavior of a biological nervous system to a real-world object. In the neural network, a most basic component is a "neuron" model, which is the "simple unit" defined above.

Traditionally, as mentioned above, there are two schemes for "filtering" or screening sample data, namely a scheme of sample filtering based on a manual rule and a scheme of sample filtering based on semi-supervised learning. In the scheme based on the manual rule, it is necessary to manually find a rule of error samples, to construct a template of the error samples, and to remove the error samples (or noises) by template matching to obtain filtered samples. The above scheme may be costly to construct the rule and may have a limited application scope. Therefore, the above scheme may be only applicable to samples that have an explicit rule and may be represented by a template.

In the scheme based on semi-supervised learning, the machine learning model may be trained with a small number of high-quality samples selected in advance. In addition, the trained model may be used to predict total samples to select a sample with a high degree of confidence and the sample with the high degree of confidence is added into a high-quality sample set. The above scheme may rely on the quality of initial training samples on the one hand and the high-quality samples selected is likely to fit the initial training sample on the other hand, and thus it is difficult to cover the entire sample space.

According to embodiments of the present disclosure, a sample processing method is proposed to determine a high-quality sample from total samples with pre-annotated categories. In the method, the samples included in the sample set may be clustered based on feature representations of the samples and a purity of each cluster obtained by clustering the samples may be determined based on the categories of the samples. For each cluster, different post-processing strategies may be employed based on the purity of each cluster to determine the filtered samples. In this way, the high-quality sample may be determined from the total noisy sample for a subsequent task of supervised learning. Thus, the solution of the present disclosure may advantageously achieve automatic, efficient, and low-cost sample filtering.

Embodiments of the present disclosure will be described below with reference to the drawings.

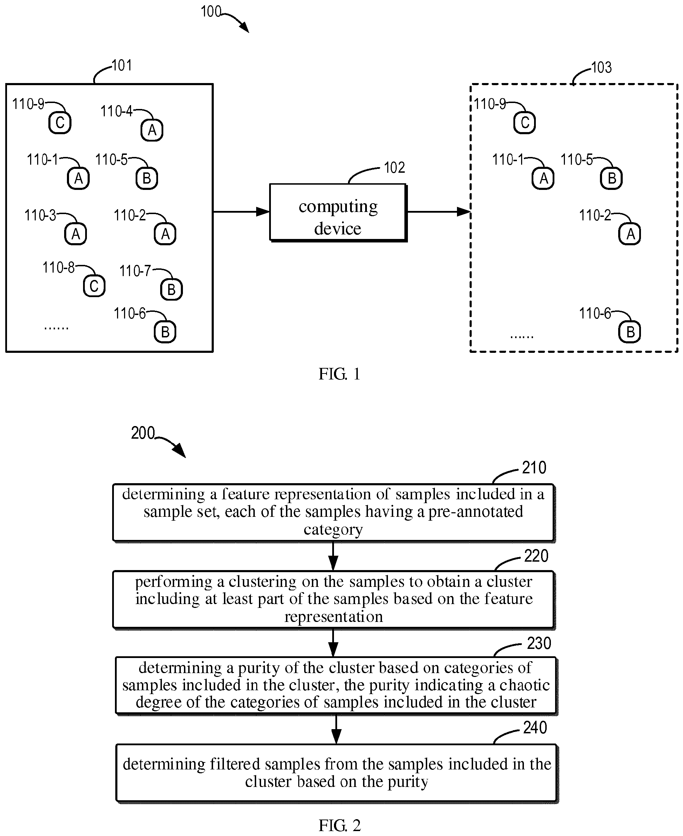

FIG. 1 is a schematic diagram illustrating an exemplary scene 100 for implementing embodiments of the present disclosure. In the exemplary scene 100, a sample set 101 may be processed by a computing device 102 to determine filtered samples from the sample set 101. For example, high-quality samples may be filtered. It should be understood, the scene 100 illustrated in FIG. 1 is merely exemplary and multiple computing devices may be used to process the sample set 101. It should also be understood that, the computing device 102 may be a stationary computing device or a portable computing device, such as a mobile telephone, a tablet computer, or the like.

The sample set 101 (also called as initial sample set 101 in the description) may include multiple samples. As illustrated in FIG. 1, the sample set 101 may include samples 110-1 to 110-9 (collectively referred to as samples 110 for ease of description). It should be understood, although nine samples 110 are illustrated to be included in the sample set 101 in FIG. 1, the sample set 101 may include more or fewer samples 110. In some embodiments, the sample set 101 may include large-scaled samples 110, for example, thousands to tens of thousands of samples.

The samples 110 may be of various types including, but not limited to, text, image, video, audio and the like. For example, the samples 110-1 to 110-9 may be one or more articles, one or more segments of text, or one or more statements, respectively. In some examples, the samples 110-1 to 110-9 may be one or more images, one or more segments of video, respectively. Embodiments of the present disclosure are not limited in the type of samples.

The sample 110 may have a pre-annotated (or labelled) category, for example, one of categories A, B, and C as illustrated in FIG. In FIG. 1, the samples 110-1 to 110-4 may all have the category A, the samples 110-5 to 110-7 may all have the category B, and the samples 110-8 and 110-9 may both have the category C. It should be understood, the sample 110 having three categories A, B, and C illustrated in FIG. 1 may be merely illustrative and is not intended to limit the scope of the present disclosure. Embodiments of the present disclosure may be applied to various classification scenarios, such as two-category, multi-classification scenarios.

In the description, the category may be used to indicate that samples have a same or similar attribute in an aspect. For example, in a case where the sample 110 is an article, the category of the sample may be a type of the article. For example, the samples having the categories A, B, and C may be labeled as a news article, a review article, and a popular science article, respectively. In a case where the sample 110 is an image, the category of the sample may be a type of an object contained in the image. For example, the samples having the categories A, B, and C may be labeled as containing humans, animals, and plants, respectively. The category may indicate various same or similar attributes of samples as needed, and the scope of the present disclosure is not limited thereto.

The samples 110 may be annotated with the categories A, B, and C in various methods. For example, the samples may be manually labeled. The samples 110 may also be obtained by data mining and may have predetermined categories. The categories of samples 110 may also be generated by other models or systems, and the scope of the present disclosure is not limited thereto.

Generally, the pre-annotated category may be inaccurate, resulting in noise introduced into the sample set 101. That is, the sample set 101 may include noisy samples. For example, the sample 110-7 pre-annotated as the category B illustrated in FIG. 1, in fact, correspond to the category C. As a result, the sample 110-7 is a noisy sample or an error sample that needs to be removed or corrected.

The computing device 102 may process the sample set 101 with the method disclosed herein to determine at least some of the samples 110 as filtered samples. For example, as illustrated in FIG. 1, the computing device 102 may determine samples 110-1, 110-2, 110-5, 110-6, and 110-9 from the sample set 101 as the filtered samples. These filtered samples 110-1, 110-2, 110-5, 110-6, and 110-9 may constitute, for example, a filtered sample set 103, which is a subset of the sample set 101. The filtered samples may refer to samples selected from the sample set or determined in other manners.

It should be understood, although samples 110-1, 110-2, 110-5, 110-6, and 110-9 are determined as the filtered samples as illustrated in FIG. 1, the filtered samples may include more or fewer samples 110. In some examples, the computing device 102 may be also configured to process the filtered sample set 103 with the method disclosed herein to further filter the filtered samples.

In order to more clearly understand the sample processing method according to embodiments of the present disclosure, embodiments of the present disclosure will be further described with reference to FIG. 2. FIG. 2 is a flow chart illustrating a sample processing method 200 according to embodiments of the present disclosure. The method 200 may be implemented by the computing device 102 illustrated in FIG. 1. For ease of discussion, the method 200 may be described with reference to FIG. 1.

At block 210, the computing device 102 determines a feature representation of samples 110 included in a sample set 101. Each of the samples 110 has a pre-annotated category. For example, the samples 110-1 to 110-4 all have the category A, the samples 110-5 to 110-7 all have the category B, and both the samples 110-8 and 110-9 have the category C. The feature representation may be used to indicate a subset of features associated with one or more attributes of the samples 110 The feature representation may describe the samples 110 abstractly or mathematically. The feature representation may be a multidimensional vector or a matrix. The computing device 102 may determine the feature representation in a method for mapping initial samples 110 onto a feature space as a feature vector.

In some examples, a predefined feature space may be used. The computing device 102 may determine feature values of the samples 110 of the sample set 101 in the predefined feature space and determine a feature vector formed by the feature values as the feature representation. For example, in a case where the samples 110 are text and the feature space is formed by words included in a dictionary, the feature representation of the samples 110 may be a word vector. In a case where the feature space is formed by expressions included in the dictionary, the feature representation of the samples 110 may be an expression vector.

In some examples, a machine learning method may be used to learn the feature representation of the sample. The computing device 102 may use a feature extraction model to determine the feature representation. The feature extraction model may be based on any machine learning method. For example, the feature extraction model may include a neural network such as a convolutional neural network CNN, a recurrent neural network, and the like.

The computing device 102 may input the sample set 101 into the feature extraction model, i.e., the neural network, to obtain neurons of a hidden layer associated with the sample 110 of the sample set 101. The computing device 102 may further determine the feature representation of the samples 110 included in the sample set 101 based on the neurons of the hidden layer. That is, the computing device 102 may determine a generated hidden layer vector as the feature representation of the samples 110. For example, in a case where the samples 110 are text, a convolutional neural network CNN classifier may be used for training and the hidden layer vector generated during a process of training the model may be output as the feature vector of the sample.

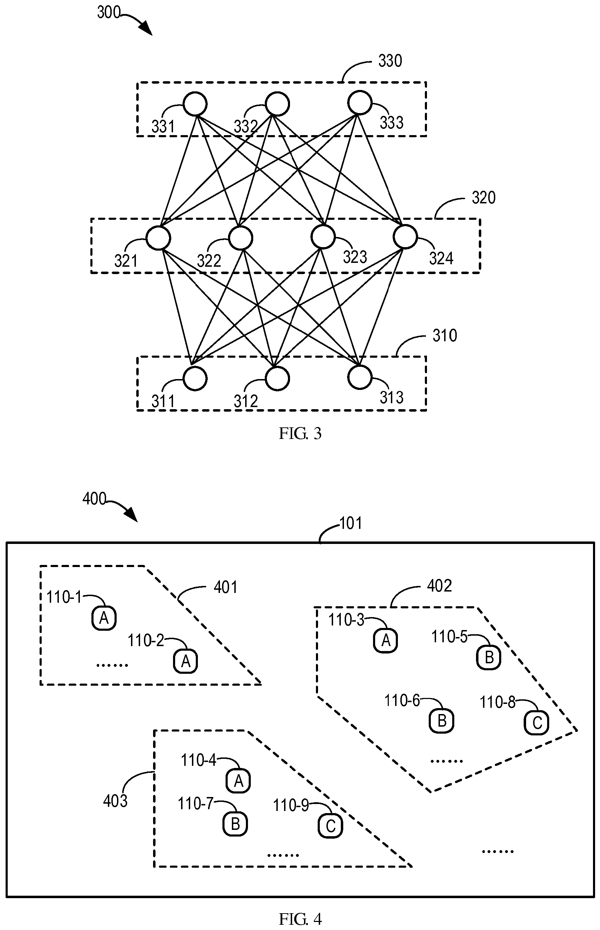

A process of determining the feature representation of the samples 110 by the neural network may be described below with reference to FIG. 3. FIG. 3 is a schematically diagram illustrating a neural network 300 for determining a feature representation according to embodiments of the present disclosure. The neural network 300 may include an input layer 310. The input layer may include neurons 311, 312 and 313 of the input layer. Each neuron 311, 312 and 313 of the input layer 310 may receive the feature value of each of the samples 110 as an input. A hidden layer 320 including neurons 321, 322, 323 and 324 of the hidden layer may receive an output from the input layer 320 and provide an output to a next layer 330 after some operations. A layer 330 including neurons 331, 332, and 333 may be an output layer or a next hidden layer.

The computing device 102 may determine the feature representation of the samples 110 based on, for example, the neurons 321, 322, 323 and 324 of the hidden layer. The computing device 102 may determine values outputted from the neurons 321, 322, 323 and 324 of the hidden layer as values of the feature vector in respective dimensions and determine the feature vector as the feature representation. As illustrated in FIG. 3, the feature vector used as the feature representation may have four dimensions. In a case where the layer 330 is the hidden layer, the feature representation may be determined based on the neurons 331, 332, and 333.

It should be understood, the neural network 300 illustrated in FIG. 3 is merely illustrative and is not intended to limit the scope of the present disclosure. The computing device 102 may use a neural network having any number of hidden layers and any number of neurons of the hidden layer. In addition, the computing device 102 may determine, based on actual requirements (such as the type of the sample, and the requirement on the task), a hidden layer of which the neurons may be used.

In examples, the feature representation may be determined based on data of the hidden layer generated by the trainable neural network, rather than a direct representation of sample features. The feature representation may indicate a closely related representation to a target, facilitating subsequent clustering. Furthermore, it should be noted, in an example, since the neural network is used to acquire a hidden layer vector representation of the sample 110, a classification accuracy of the neural network model is not strictly required, and the total noise samples can be directly used for training.

Turning to FIG. 2 again, at block 220, the computing device 102 perform a clustering on the sample set 101 based on the feature representation determined at block 210 to obtain clusters including one or more of the samples 110. The clustering may employ any suitable clustering algorithm, including a k-means clustering algorithm, a density clustering algorithm such as density-based clustering algorithm (DBSCAN), and the like.

A result of the clustering may typically include n clusters. Each cluster may include a different number of samples 110. FIG. 4 is a schematic diagram illustrating a result of a clustering according to embodiments of the present disclosure. As illustrated in FIG. 4, clusters 401, 402 and 403 may be obtained by performing the clustering on the sample set 101. The cluster 401 may at least include the samples 110-1 and 110-2. The cluster 402 may at least include the samples 110-3, 110-5, 110-6 and 110-8. The cluster 403 may at least include the samples 110-4, 110-7 and 110-9. It should be understood, the results 400 of the clustering illustrated in FIG. 4 is merely illustrative and is not intended to limit the scope of the present disclosure. The result 400 of the clustering may also include more or fewer clusters, and the clusters 401, 402, and 403 each may also include more or fewer samples 110.

With reference to FIG. 2, at block 230, the computing device 102 determines a purity of each cluster based on categories of samples included in the respective cluster. The purity may be used to indicate a chaotic degree the categories of samples included in the cluster. The more the categories of samples included in the cluster and the closer the number of samples corresponding to each category, the lower the purity of the cluster. Conversely, the higher the proportion of samples of a certain category in the cluster, the higher the purity of the cluster. The purity may be represented as a number between 0 and 1, or as a percentage, or can be represented using a suitable number. The computing device 102 may determine the purities for the clusters 401, 402, and 403, respectively. Different purity calculation methods may be designed according to different application requirements.

In some examples, a ratio of the number of samples included in a category having a largest number of samples to the number of samples included in the cluster may be used as the purity of the cluster. Taking the cluster 402 illustrated in FIG. 4 as an example, the computing device 102 can determine the number of samples for each category (i.e., the categories A, B, and C) in the cluster 402. For example, the computing device 102 may determine that, in the cluster 402, the number of samples corresponding to the category A may be 30, the number of samples corresponding to the category B may be 60, and the number of samples corresponding to the category C may be 10.

The computing device 102 may determine a category having a maximum number based on the number of samples corresponding to each category A, B, and C. For example, the computing device 102 may determine that the number of samples corresponding to the category B is maximal in the cluster 402, and the maximum number is 60. The computing device 102 may determine the purity of cluster 402 based on the maximum number and a total number of samples included in the cluster 402. For example, in a case where the total number of samples included in the cluster 402 is 100, the purity of cluster 402 may be determined to be 60/100 = 0.6. The purity of other cluster (e.g., the cluster 401 and the cluster 403) may be determined in the same manner.

In some examples, information entropy may be used to determine the purity of the cluster. Equation (1) may be used to calculate the information entropy H for each cluster 401, 402 and 403.

$$\mathrm{H} = -\sum\nolimits_{i=1}^{k} p_i \log p_i \qquad (1)$$

where $p_i$ represents the ratio of the number of samples included in the $i^{\text{th}}$ category to the total number of samples included in the cluster, and k represents the total number of categories of the samples included in the cluster. For example, for the cluster 402 illustrated in FIG. 4, k is 3, $p_1$ represents the ratio (equaling to 0.6) corresponding to the category A, $p_2$ represents the ratio (equaling to 0.3) corresponding to the category B, and $p_3$ represents the ratio (equaling to 0.1) corresponding to the category C.

It should be noted, the higher the chaotic degree of the categories of samples included in the cluster, the larger the information entropy H. Therefore, a reciprocal 1/H of the information entropy may be used as the purity of the cluster 402. Purities of other clusters (e.g., the cluster 401 and the cluster 403) may be determined in the same manner

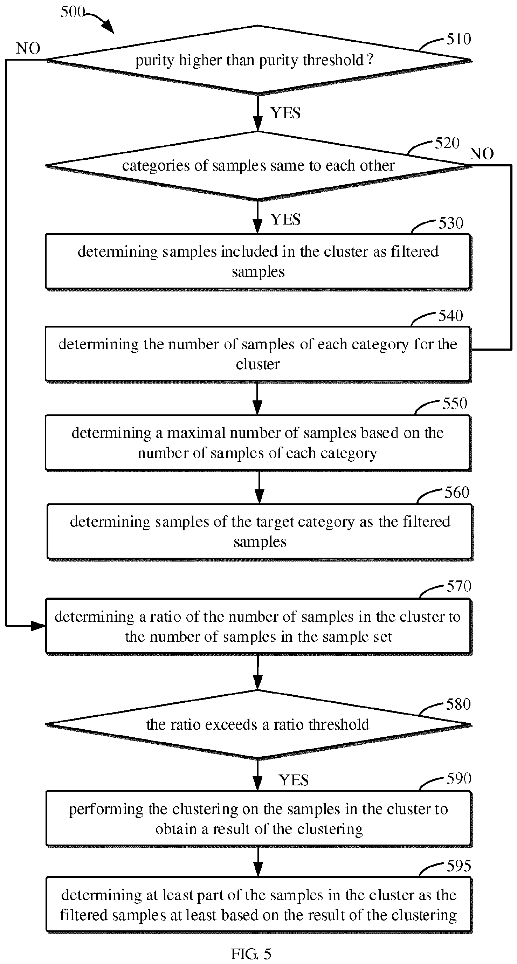

At block 240, the computing device 102 determines filtered samples from the samples included in the cluster based on the purity determined at block 230. The computing device 102 may employ different post-processing strategies based on different purities to obtain high-quality samples from each cluster 401, 402 and 403. For example, different post-processing strategies may be adopted in three cases based on the purities. A first case is that the cluster includes a single category of samples (for example, the category A of samples). A second case is that the cluster includes multiple categories of samples and has a high purity (e.g., higher than a threshold). A third case is that the cluster includes multiple categories of samples and has a low purity (e.g., lower than a threshold). The process of determining the filtered samples based on the purity may be described in detail below with reference to FIG. 5.

The sample processing method 200 according to embodiments of the present disclosure is described above. In this way, the entire sample set may be filtered and screened to obtain the high-quality annotated samples. Therefore, the solution of the present disclosure may filter and screen the samples, in particular, filter and screen the total large-scaled and noisy samples, thereby effectively removing noise samples, improving the quality of samples, and facilitating to improve an effect of large-scaled tasks of the supervised machine learning.

In some examples, the computing device 102 may perform the method 200 or a part of the method 200 illustrated in FIG. 2 on the filtered samples again to further filter the samples to obtain higher-quality samples. In detail, the computing device 102 may determine a subset of the sample set 102 based on the filtered samples obtained from the clusters 401, 402 and 403. As mentioned above with respect to FIG. 1, the subset may be called in the present disclosure as the filtered sample set, such as the filtered sample set 103 illustrated in FIG. 1. The filtered sample set 103 may include filtered samples obtained from the clusters 401, 402 and 403 associated with the sample set 101.

In examples in which the feature representation is determined based on the neural network described above, blocks 210-240 illustrated in FIG. 2 may be applied to the filtered sample set 103 again to update the filtered samples. The computing device 102 may input the filtered sample set 103 into the feature extraction model (i.e., neural network) mentioned at block 210 to obtain an updated feature representation of the samples included in the filtered sample set 103. Since the neural network used of block 210 is learnable, in a case where the filtered sample set 103 different from the initial sample set 101 is applied, a different feature representation may be obtained for a same sample (e.g., for the sample 110-1). That is, an updated feature representation may be obtained.

The computing device 102 may perform a clustering on the filtered sample set 103 based on the updated feature representation, to update the filtered samples based on a new result of the clustering (i.e., generated clusters and purities of the generated clusters). That is, the computing device 102 may repeat the blocks 230 and 240 of FIG. 2.

In examples described above in which the feature representation is determined based on the predefined feature space, the blocks 220-240 of FIG. 2 may be executed for the filtered sample set 103 to update the filtered samples. The computing device 102 may perform the clustering on the filtered sample set 103 based on the feature representation previously determined at the block 210. In an example, since the feature representation is determined in the predefined feature space, the feature representation is unchanged for a same sample (e.g., sample 110-1).

Compared with the initial sample set 101, performing the clustering on the filtered sample set 103 may be implemented with different clustering algorithms or with different clustering parameters (e.g., a clustering distance) or with a combination thereof. The computing device 102 may further filter the samples based on the clusters obtained with the above-mentioned methods, to update the filtered samples.

In this case, a better result of the clustering may be achieved by determining the high-quality samples. The better result of the clustering may facilitate to further obtain higher-quality samples until a termination condition is met. The termination condition may be designed according to a specific application scenario. For example, the termination condition may be that, in the result of the clustering, a ratio of the number of samples included in the cluster having a low purity to the total number of samples included in the sample set 101 is less than a predetermined threshold. The termination condition may also be that the number of filtered samples is less than a predetermined number.

In an example, the higher-quality samples may be further obtained by an iteration operation to improve the quality of samples ultimately obtained. In this way, the quality of samples may be further improved, thereby facilitating to improve an effect of a subsequent task of the supervised learning.

As mentioned above with reference to FIG. 2, the computing device 102 may determine the filtered samples based on the purity. The determination of the filtered samples may be described below with reference to FIGS. 4 and 5. FIG. 5 is a flow chart illustrating a method 500 for determining filtered samples according to embodiments of the present disclosure. The method 500 may be viewed as an implementation of the block 240 of FIG. 2.

Referring to FIG. 5, at block 510, the computing device 102 may determine whether the purity of the cluster is greater than a purity threshold. The purity threshold may depend on specific application scenarios, such as the categories of samples 110, requirements of the task of the supervised learning on sample accuracy, and the like. In a case where the computing device 102 determines that the purity of the cluster is greater than the purity threshold at block 510, the filtered samples may be determined based on the categories of samples included in the cluster. That is, the method 500 may proceed to the block 520. For example, for the cluster 401 (or the cluster 402), the computing device 102 may determine that the purity of the cluster 401 (or the cluster 402) is greater than the purity threshold.

At block 520, the computing device 102 may determine whether the categories of samples included in the cluster 401 (or included in the cluster 402) are same to each other. In a case where the computing device 102 determines at the block 520 that the categories of samples included in the cluster are same to each other, the method 500 may proceed to the block 530. For example, for the cluster 401, the computing device 102 may determine 520 that the categories of samples included in the cluster 401 are all the category A. At the block 530, the computing device 102 may determine all of the samples included in the cluster 401 as the screened samples. For example, the samples 110-1, 110-2, etc. included in the cluster 401 may be determined as the screened samples.

When the computing device 102 determines at the block 520 that the categories of samples included in the cluster are different for each other (i.e., the samples included in the cluster correspond to multiple categories), the method 500 may proceed to the block 540. For example, for the cluster 402, the computing device 102 may determine that the samples in the cluster 402 correspond to the categories A, B, and C respectively. In this case, the cluster 402 includes multiple categories of samples and has a purity greater than the purity threshold, which means that a certain category of samples is the majority of the cluster 402.

At block 540, the computing device 102 may determine the number of samples corresponding to each category for the cluster 402. For example, as described above, the computing device 102 may determine that, in the cluster 402, the number of samples corresponding to the category A may be 30, the number of samples corresponding to the category B may be 60, and the number of samples corresponding to the category C may be 10. At block 550, the computing device 102 may determine a category having the largest number of samples based on the number of samples for each category. For example, the computing device 102 may determine that, in the cluster 402, the number of samples corresponding to the category B is maximal.

At block 560, the computing device 102 may determine samples of the determined category as the filtered samples. For example, the computing device 102 may determine samples of the category B in cluster 402 (such as the samples 110-5 and 110-6) as the filtered samples.

For other categories of samples than the category B (such as the samples 110-3, 110-8 and the like), different processing may be employed depending on different application scenarios, task requirements, and the like. For example, in a case where the number of samples of other categories is smaller than the total number of samples included in the sample set 101, the samples of these other categories may be discarded directly. If the subsequent task of the supervised learning needs higher requirements on the sample quality, the samples of other categories may be outputted, such that the samples of other categories may be manually annotated.

In some examples, automatic error correction may also be performed on samples of other categories in the cluster 402. For example, in a case where more than a certain proportion (such as 95%) of samples 110 included in the cluster 402 are of the category B, the samples of the categories A and C included in the cluster 402 may be corrected as samples of the category B. Further, corrected samples may also be determined as the filtered samples.

Turning to the block 510 again, in a case where the computing device 102 determines at the block 510 that the purity of the cluster is not greater than the purity threshold, different processing may be taken based on the number of samples included in the cluster. That is, the method 500 may proceed to the block 570. For example, for the cluster 403, the computing device 102 may determine at the block 510 that the purity of the cluster 403 is lower than the purity threshold, which means that the categories of the samples included in cluster 403 are uniformly distributed.

At block 570, the computing device 102 may determine a ratio of the number of samples included in the cluster 403 to the total number of samples included in the sample set 101. At block 580, the computing device 102 may determine whether the ratio exceeds a ratio threshold. The ratio threshold is also called as an upper ratio threshold in the present disclosure. In a case where it is determined that the ratio exceeds the upper ratio threshold, the number of samples included in the cluster 403 is large and the method 500 may proceed to the block 590.

At block 590, the computing device 102 may perform the clustering on the samples (such as the samples 110-4, 110-7, 110-9, etc.) included in the cluster 403 to obtain a result of the clustering. The result of the clustering may be one or more subsets (also called as one or more sub-clusters) including the samples 110-4, 110-7, 110-9, etc. included in the cluster 403. At block 595, the computing device 102 may determine at least part of the samples included in the cluster 403 as the filtered samples, based on the result of the clustering. For example, the computing device 102 may apply the blocks 230 and 240 of FIG. 2 to the one or more sub-clusters to determine the filtered samples.

In a case where the computing device 102 determines at the block 580 that the ratio obtained at the block 570 does not exceed the upper ratio threshold, the computing device 102 may take different processing depending on the number of samples included in the cluster 403. When the number of samples included in the cluster 403 is small, the samples included in the cluster 403 may be discarded. For example, in a case where the ratio corresponding to the cluster 403 determined at the block 570 is less than another ratio threshold (also called as a lower ratio threshold, for ease of discussion), all samples included in the cluster 403 may be discarded.

In a case where the number of samples included in the cluster 403 is moderate, for example, the ratio corresponding to the cluster 403 determined at the block 570 is greater than the lower ratio threshold, different processing may be taken depending on the particular application scenario. For example, for a case that a requirement on sample accuracy is high and a total number of samples is not large enough, the samples included in the cluster 403 may be output and manually annotated. It is also possible to sampling the samples included in the cluster 403 and manually determine the subsequent processing. It is also possible to discard all the samples included in the cluster 403, or to reserve all of the samples for optimization in a next iteration.

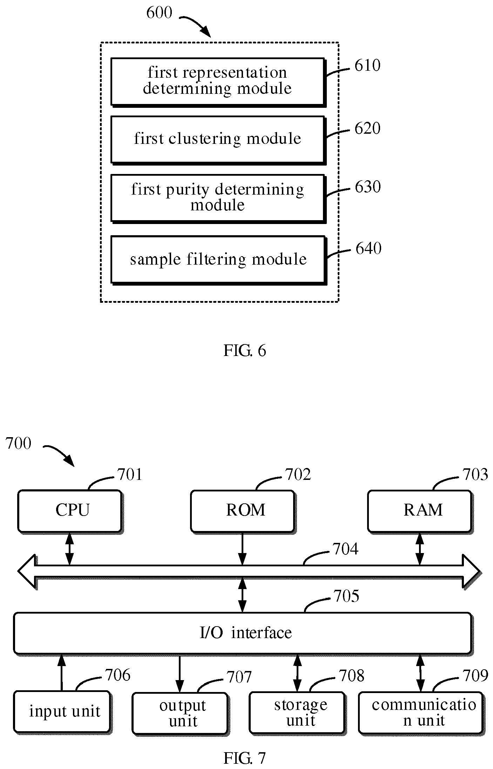

FIG. 6 is a block diagram illustrating a sample processing device 600 according to embodiments of the present disclosure. The device 600 may be integrated in the computing device 102 or may be implemented as the computing device 102. As illustrated in FIG. 6, the device 600 may include a first representation determining module 610, configured to determine a feature representation of samples included in a sample set, each of the samples having a pre-annotated category. In addition, the device 600 may include a first clustering module 620, configured to perform a clustering on the samples to obtain a cluster including one or more of the samples based on the feature representation. Furthermore, the device 600 may include a first purity determining module 630, configured to determine a purity of the cluster based on categories of samples included in the cluster, the purity indicating a chaotic degree of the categories of samples included in the cluster. Moreover, the device 600 may include a sample filtering module 640, configured to determine filtered samples from the samples included in the cluster based on the purity.

In some examples, the sample filtering module 640 may include a first sample determining module, configured to, in response to determining that the purity is higher than a purity threshold, determine the filtered samples based on the categories of the samples included in the cluster.

In some examples, the first sample determining module may include a second sample determining module, configured to, in response to determining that the categories of the samples included in the cluster are same to each other, determine the samples included in the cluster as the filtered samples.

In some examples, the first sample determining module may include a first number determining module, configured to, in response to determining that the categories of the samples included in the cluster are different, determine the number of samples for each category. In addition, the first sample determining module may include a maximal category determining module, configured to determine a target category having a maximal number of samples for the cluster based on the number of samples for each category. Furthermore, the first sample determining module may include a third sample determining module, configured to determine samples of the target category as the filtered samples.

In some examples, the sample clustering module 640 may include a sample ratio determining module, configured to, in response to determining that the purity is lower than a purity threshold, determine a ratio of the number of samples included in the cluster to the number of samples included in the sample set. In addition, the sample clustering module 640 may include a second clustering module, configured to, in response to determining that the ratio exceeds a ratio threshold, perform the clustering on the samples included in the cluster to obtain a result of the clustering. Furthermore, the sample clustering module 640 may include a fourth sample determining module, configured to determine at least part of the samples included in the cluster as the filtered samples at least based on the result of the clustering.

In some examples, the first representation determining module 610 may include a sample applying module, configured to input the sample set to a feature extraction model, to obtain neurons of hidden layer related to the sample set. In addition, the first representation determining module 610 may include a second representation determining module, configured to determine the feature representation of the samples included in the sample set based on the neurons of the hidden layer.

In some examples, the device 600 may further include a first subset determining module, configured to determine a subset of the sample set at least based on the filtered samples, the subset including filtered samples obtained from at least one cluster associated with the sample set. In addition, the device 600 may further include a first subset applying module, configured to input the subset into the feature extraction model to obtain an updated feature representation of samples included in the subset. Furthermore, the device 600 may further include a first sample updating module, configured to perform the clustering on the subset to update the filtered samples based on a result of the clustering based on the updated feature representation.

In some examples, the first representation determining module 610 may include a third representation determining module, configured to determine feature values of the samples included in the sample set in a predefined feature space as the feature representation.

In some examples, the device 600 may further include a second subset determining module, configured to determine a subset of the sample set at least based on the filtered samples, the subset including filtered screens obtained from at least one cluster associated with the sample set. In addition, the device 600 may further include a second sample updating module, configured to perform the clustering on the subset based on the feature representation to update the filtered samples based on a result of the clustering.

In some examples, the first purity determining module 630 may further include a second number determining module, configured to determine the number of samples of each category for the cluster. In addition, the first purity determining module 630 may further include a maximal number determining module, configured to determine a maximal number of samples based on the number of samples of each category. Furthermore, the first purity determining module 630 may further a second purity determining module, configured to determine the purity based on the maximal number of samples and a total number of samples included in the cluster.

FIG. 7 is a block diagram illustrating an exemplary device 700 for implementing embodiments of the present disclosure. The device 700 may be configured to implement the computing device 102 illustrated in FIG. 1. As illustrated in FIG. 7, the device 700 includes a central processing unit (CPU) 701. The CPU 701 may be configured to execute various appreciate actions and processing according to computer program instructions stored in a read only memory (ROM) 702 or computer program instructions loaded from a storage unit 708 to a random-access memory (RAM) 703. In the RAM 703, various programs and data required by the device 700 may be further stored. The CPU 701, the ROM 702 and the RAM 703 are connected to each other via a bus 704. An input/output (I/O) interface 705 is also connected to the bus 704.

Components of the device 700 are connected to the I/O interface 705, including an input unit 706, such as a keyboard, a mouse, etc.; an output unit 707, such as various types of displays, loudspeakers, etc.; a storage unit 708, such as a magnetic disk, a compact disk, etc.; and a communication unit 709, such as a network card, a modem, a wireless communication transceiver, etc. The communication unit 709 allows the device 700 to exchange information/data with other devices through a computer network, such as Internet, and/or various telecommunication networks.

The various procedures and processing described above, such as any of the method 200 and the method 500, may be performed by the processing unit 701. For example, in some embodiments, the method 200 can be implemented as a computer software program that is tangibly enclosed in a machine readable medium, such as the storage unit 708. In some embodiments, some or all computer programs may be loaded and/or installed onto the device 700 via the ROM 702 and/or the communication unit 709. One or more blocks of the method 200 described above may be performed when a computer program is loaded into the RAM 703 and executed by the CPU 701. In some example, the CPU 701 can be configured to perform any of the method 200 and the method 500 by any other suitable means (e.g., by means of firmware).

Functions described above in the present disclosure may be performed at least in part by one or more hardware logic components. For example, and without limitations, exemplary types of hardware logic components that may be used include: field programmable gate array (FPGA), application specific integrated circuit (ASIC), application specific standard product (ASSP), system on chip (SOC), complex programmable logic device (CPLD).

Program code for implementing the methods of the present disclosure can be written in any combination of one or more programming languages. The program code may be provided to a general purpose computer, a special purpose computer or a processor or controller of other programmable data processing apparatus such that the program code, when executed by the processor or controller, causes that the functions/operations specified in the flowcharts and/or block diagrams are implemented. The program code may be executed entirely on the machine, partly on the machine, as part of the stand-alone software package, and partly on the remote machine or entirely on the remote machine or server.

In the present disclosure, a machine-readable medium can be a tangible medium that can contain or store a program for use by or in connection with an instruction execution system, apparatus, or device. The machine-readable medium can be a machine-readable signal medium or a machine-readable storage medium. A machine-readable medium can include, but is not limited to, an electronic, magnetic, optical, electromagnetic, infrared, or semiconductor system, apparatus, or device, or any suitable combination of the foregoing. More specific examples of machine-readable storage media may include electrical connections based on one or more wires, a portable computer disk, a hard disk, a random access memory (RAM), a read only memory (ROM), an erasable programmable read only memory (EPROM or flash memory), optical fiber, compact disk read only memory (CD-ROM), optical storage device, magnetic storage device, or any suitable combination of the foregoing.

In addition, although the operations are depicted in a particular order, this should be understood as requiring that such operations be performed in the particular order shown or in the order, or that all illustrated operations should be performed to achieve the desired results. Multitasking and parallel processing may be advantageous in certain circumstances.

**Claims**

1. A sample processing method, comprising:

determining (210) a feature representation of samples comprised in a sample set, each of the samples having a pre-annotated category;
performing (220) a clustering on the samples in the sample set to obtain a plurality of clusters based on the feature representation, each cluster comprising one or more samples;
determining (230) a purity of each cluster based on categories of samples comprised in the cluster, the purity indicating a chaotic degree of the categories of samples comprised in the cluster; and
determining (240) filtered samples by employing different post-processing strategies for each cluster based on the purity of each cluster,
wherein determining (240) the filtered samples by employing different post-processing strategies for each cluster based on the purity of each cluster comprises:

determining whether the purity of the cluster is higher than a threshold purity;
in response to determining that the purity is higher than the purity threshold, determining whether the categories of the samples comprised in the cluster are same to each other;
in response to determining that the categories of the samples comprised in the cluster are same to each other, determining all of the samples comprised in the cluster as the filtered samples;
in response to determining that the categories of the samples comprised in the cluster are different, determining (540) the number of samples for each category;
determining a target category having a maximal number of samples for the cluster based on the number of samples for each category;
determining samples of the target category as the filtered samples; and
in response to determining that the purity is lower than a purity threshold, determining (570) a ratio of the number of samples comprised in the cluster to the number of samples comprised in the sample set;
in response to determining that the ratio exceeds a ratio threshold, performing (590) a further clustering on the samples comprised in the cluster to obtain a result of the clustering, the result of the clustering comprising one or more sub-clusters of the samples comprised in the cluster, wherein, compared with the clustering performed on the sample set, the clustering is performed on the samples comprised in the cluster with different clustering algorithms or with different clustering parameters or with a combination thereof; and repeating the step of determining (230) the purity and the corresponding post-processing strategy for each of the one or more sub-clusters, to determine the filtered samples from the sub-clusters.

2. The method of claim 1, wherein determining (210) the feature representation comprises:

inputting the sample set to a feature extraction model, to obtain neurons of a hidden layer neuron related to the sample set; and
determining the feature representation of the samples comprised in the sample set based on the neurons of the hidden layer.

3. The method of claim 2, further comprising:

determining a subset of the sample set, the subset comprising the filtered samples obtained from at least one cluster associated with the sample set;
inputting the subset into the feature extraction model to obtain an updated feature representation of samples comprised in the subset;
performing a further clustering on the subset based on the updated feature representation to obtain a result of the clustering, the result of the clustering comprising one or more sub-clusters of the samples comprised in the subset, wherein, compared with the clustering performed on the sample set, the clustering is performed on the subset with different clustering algorithms or with different clustering parameters or with a combination thereof; and
repeating the step of determining (230) the purity and the corresponding post-processing strategy for each of the one or more sub-clusters, to update the filtered samples.

4. The method of claim 1, wherein determining (210) the feature representation comprises:
determining feature values of the samples comprised in the sample set in a predefined feature space as the feature representation.

5. The method of claim 4, further comprising:

determining a subset of the sample set, the subset comprising the filtered samples obtained from at least one cluster associated with the sample set; and
performing a further clustering on the subset based on the updated feature representation to obtain a result of the clustering, the result of the clustering comprising one or more sub-clusters of the samples comprised in the subset, wherein, compared with the clustering performed on the sample set, the clustering is performed on the subset with different clustering algorithms or with different clustering parameters or with a combination thereof; and
repeating the step of determining (230) the purity and the corresponding post-processing strategy for each of the one or more sub-clusters, to update the filtered samples.

6. The method of any one of claims 1 to 5, wherein determining (230) the purity of the cluster comprises:

determining the number of samples of each category for the cluster;
determining (550) a maximal number of samples based on the number of samples of each category; and
determining the purity based on the maximal number of samples and a total number of samples comprised in the cluster.

7. A sample processing device, configured to execute a sample processing method of any one of claims 1 to 6.

8. A computer readable storage medium, having a computer program stored thereon, wherein when the computer program is executed by a processor, a method of any one of claims 1 to 6 is executed.

**Patentansprüche**

1. Probenverarbeitungsverfahren, umfassend:

Bestimmen (210) einer Merkmalsdarstellung von Proben, die in einem Probensatz enthalten sind, wobei jede der Proben eine vorab kommentierte Kategorie aufweist;

Durchführen (220) einer Clusterbildung an den Proben in dem Probensatz, um eine Vielzahl von Clustern basierend auf der Merkmalsdarstellung zu erhalten, wobei jeder Cluster eine oder mehrere Proben umfasst;

Bestimmen (230) einer Reinheit jedes Clusters basierend auf in dem Cluster enthaltenen Probenkategorien, wobei die Reinheit einen chaotischen Grad der in dem Cluster enthaltenen Probenkategorien angibt; und

Bestimmen (240) gefilterter Proben durch Anwenden unterschiedlicher Nachbearbeitungsstrategien für jeden Cluster basierend auf der Reinheit jedes Clusters,

wobei Bestimmen (240) der gefilterten Proben durch Anwenden unterschiedlicher Nachbearbeitungsstrategien für jeden Cluster basierend auf der Reinheit jedes Clusters umfasst:

Bestimmen, ob die Reinheit des Clusters höher als ein Reinheitsschwellenwert ist;

als Reaktion auf Bestimmen, dass die Reinheit höher als der Reinheitsschwellenwert ist, Bestimmen, ob die Kategorien der in dem Cluster enthaltenen Proben untereinander gleich sind;

als Reaktion auf Bestimmen, dass die Kategorien der in dem Cluster enthaltenen Proben untereinander gleich sind, Bestimmen aller in dem Cluster enthaltenen Proben als die gefilterten Proben;

als Reaktion auf Bestimmen, dass die Kategorien der in dem Cluster enthaltenen Proben unterschiedlich sind, Bestimmen (540) der Anzahl der Proben für jede Kategorie;

Bestimmen einer Zielkategorie mit einer maximalen Anzahl von Proben für den Cluster basierend auf der Anzahl von Proben für jede Kategorie;

Bestimmen von Proben der Zielkategorie als die gefilterten Proben; und

als Reaktion auf Bestimmen, dass die Reinheit unter einem Reinheitsschwellenwert liegt, Bestimmen (570) eines Verhältnisses der Anzahl von in dem Cluster enthaltenen Proben zu der Anzahl von in dem Probensatz enthaltenen Proben;

als Reaktion auf Bestimmen, dass das Verhältnis einen Verhältnisschwellenwert überschreitet, Durchführen (590) einer weiteren Clusterbildung der in dem Cluster enthaltenen Proben, um ein Ergebnis der Clusterbildung zu erhalten, wobei das Ergebnis der Clusterbildung einen oder mehrere Untercluster der in dem Cluster enthaltenen Proben umfasst, wobei im Vergleich zu der Clusterbildung, die an dem Probensatz durchgeführt wird, die Clusterbildung an den in dem Cluster enthaltenen Proben mit unterschiedlichen Clusterbildungsalgorithmen oder mit unterschiedlichen Clusterbildungsparametern oder mit einer Kombination davon durchgeführt wird; und

Wiederholen des Schritts zum Bestimmen (230) der Reinheit und der entsprechenden Nachbearbeitungsstrategie für jeden der einen oder mehreren Untercluster, um die gefilterten Proben aus den Unterclustern zu bestimmen.

2. Verfahren nach Anspruch 1, wobei Bestimmen (210) der Merkmalsdarstellung umfasst:

Eingeben des Probensatzes in ein Merkmalsextraktionsmodell, um Neuronen eines Neurons einer verborgenen Schicht zu erhalten, die mit dem Probensatz in Zusammenhang stehen; und

Bestimmen der Merkmalsdarstellung der in dem Probensatz enthaltenen Proben basierend auf den Neuronen der verborgenen Schicht.

3. Verfahren nach Anspruch 2, weiter umfassend:

Bestimmen eines Teilsatzes des Probensatzes, wobei der Teilsatz die gefilterten Proben umfasst, die von mindestens einem Cluster erhalten wurden, der dem Probensatz zugeordnet ist;

Eingeben des Teilsatzes in das Merkmalsextraktionsmodell, um eine aktualisierte Merkmalsdarstellung von in dem Teilsatz enthaltenen Proben zu erhalten;

Durchführen einer weiteren Clusterbildung an dem Teilsatz basierend auf der aktualisierten Merkmalsdarstellung, um ein Ergebnis der Clusterbildung zu erhalten, wobei das Ergebnis der Clusterbildung einen oder mehrere Untercluster der in dem Teilsatz enthaltenen Proben umfasst, wobei verglichen mit der Clusterbildung, die an dem Probensatz durchgeführt wurde, die Clusterbildung an dem Teilsatz mit unterschiedlichen Clusterbildungsalgorithmen oder mit unterschiedlichen Clusterbildungsparametern oder mit einer Kombination davon durchgeführt wird; und

Wiederholen des Schritts zum Bestimmen (230) der Reinheit und der entsprechenden Nachbearbeitungsstrategie für jeden der einen oder mehreren Untercluster, um die gefilterten Proben zu aktualisieren.

4. Verfahren nach Anspruch 1, wobei Bestimmen (210) der Merkmalsdarstellung umfasst:

Bestimmen von Merkmalswerten der in dem Probensatz enthaltenen Proben in einem vordefinierten Merkmalsraum als Merkmalsdarstellung.

**5.** Verfahren nach Anspruch 4, weiter umfassend:

Bestimmen eines Teilsatzes des Probensatzes, wobei der Teilsatz die gefilterten Proben umfasst, die von mindestens einem Cluster erhalten wurden, der dem Probensatz zugeordnet ist; und

Durchführen einer weiteren Clusterbildung an dem Teilsatz basierend auf der aktualisierten Merkmalsdarstellung, um ein Ergebnis der Clusterbildung zu erhalten, wobei das Ergebnis der Clusterbildung einen oder mehrere Untercluster der in dem Teilsatz enthaltenen Proben umfasst, wobei verglichen mit der Clusterbildung, die an dem Probensatz durchgeführt wurde, die Clusterbildung an dem Teilsatz mit unterschiedlichen Clusterbildungsalgorithmen oder mit unterschiedlichen Clusterbildungsparametern oder mit einer Kombination davon durchgeführt wird; und

Wiederholen des Schritts zum Bestimmen (230) der Reinheit und der entsprechenden Nachbearbeitungsstrategie für jeden der einen oder mehreren Untercluster, um die gefilterten Proben zu aktualisieren.

**6.** Verfahren nach einem der Ansprüche 1 bis 5, wobei Bestimmen (230) der Reinheit des Clusters umfasst:

Bestimmen der Anzahl von Proben jeder Kategorie für den Cluster;

Bestimmen (550) einer maximalen Anzahl von Proben basierend auf der Anzahl von Proben jeder Kategorie; und

Bestimmen der Reinheit basierend auf der maximalen Anzahl von Proben und einer Gesamtanzahl von Proben, die in dem Cluster enthalten sind.

**7.** Probenverarbeitungsvorrichtung, die zum Ausführen eines Probenverarbeitungsverfahrens nach einem der Ansprüche 1 bis 6 konfiguriert ist.

**8.** Computerlesbares Speichermedium mit darauf gespeichertem Computerprogramm, wobei, wenn das Computerprogramm von einem Prozessor ausgeführt wird, das Verfahren nach einem der Ansprüche 1 bis 6 ausgeführt wird.

**Revendications**

**1.** Procédé de traitement d'échantillons, comprenant :

la détermination (210) d'une représentation de caractéristiques d'échantillons compris dans un ensemble d'échantillons, chacun des échantillons présentant une catégorie pré-annotée ;

la réalisation (220) d'un regroupement sur les échantillons dans l'ensemble d'échantillons pour obtenir une pluralité de groupes sur la base de la représentation de caractéristiques, chaque groupe comprenant un ou plusieurs échantillons ;

la détermination (230) d'une pureté de chaque groupe sur la base de catégories d'échantillons compris dans le groupe, la pureté indiquant un degré chaotique des catégories d'échantillons comprises dans le groupe ; et

la détermination (240) d'échantillons filtrés en employant différentes stratégies de post-traitement pour chaque groupe sur la base de la pureté de chaque groupe,

dans lequel la détermination (240) des échantillons filtrés en employant différentes stratégies de post-traitement pour chaque groupe sur la base de la pureté de chaque groupe comprend :

le fait de déterminer si la pureté du groupe est supérieure à un seuil de pureté ;

en réponse à la détermination que la pureté est supérieure au seuil de pureté, le fait de déterminer si les catégories des échantillons compris dans le groupe sont identiques les unes aux autres ;

en réponse à la détermination que les catégories des échantillons compris dans le groupe sont identiques les unes aux autres, la détermination de tous les échantillons compris dans le groupe en tant qu'échantillons filtrés ;

en réponse à la détermination que les catégories des échantillons compris dans le groupe sont différentes, la détermination (540) du nombre d'échantillons pour chaque catégorie ;

la détermination d'une catégorie cible présentant un nombre maximal d'échantillons pour le groupe sur la base du nombre d'échantillons pour chaque catégorie ;

la détermination d'échantillons de la catégorie cible en tant qu'échantillons filtrés ; et

en réponse à la détermination que la pureté est inférieure à un seuil de pureté, la détermination (570) d'un rapport du nombre d'échantillons compris dans le groupe sur le nombre d'échantillons compris dans l'ensemble d'échantillons ;

en réponse à la détermination que le rapport dépasse un seuil de rapport, la réalisation (590) d'un regroupement supplémentaire sur les échantillons compris dans le groupe pour obtenir un résultat du regroupement, le résultat du regroupement comprenant un ou plusieurs sous-groupes des échantillons compris dans le groupe, dans lequel, par rapport au groupement réalisé sur l'ensemble d'échantillons, le groupement est réalisé sur les échantillons compris dans le groupe avec différents algorithmes de groupement ou avec différents paramètres de groupement ou avec une combinaison de ceux-ci ; et

la répétition de l'étape de détermination (230) de la pureté et de la stratégie de post-traitement correspondante pour chacun des un ou plusieurs sous-groupes, pour déterminer les échantillons filtrés à partir des sous-groupes.

2. Procédé selon la revendication 1, dans lequel la détermination (210) de la représentation de caractéristiques comprend :

le fait d'entrer l'ensemble d'échantillons dans un modèle d'extraction de caractéristiques, pour obtenir des neurones d'un neurone de couche cachée lié à l'ensemble d'échantillons ; et

la détermination de la représentation de caractéristiques des échantillons compris dans l'ensemble d'échantillons sur la base des neurones de la couche cachée.

3. Procédé selon la revendication 2, comprenant en outre :

la détermination d'un sous-ensemble de l'ensemble d'échantillons, le sous-ensemble comprenant les échantillons filtrés obtenus à partir d'au moins un groupe associé à l'ensemble d'échantillons ;

le fait d'entrer le sous-ensemble dans le modèle d'extraction de caractéristiques pour obtenir une représentation de caractéristiques mise à jour d'échantillons compris dans le sous-ensemble ;

la réalisation d'un regroupement supplémentaire sur le sous-ensemble sur la base de la représentation de caractéristiques mise à jour pour obtenir un résultat du regroupement, le résultat du regroupement comprenant un ou plusieurs sous-groupes des échantillons compris dans le sous-ensemble, dans lequel, par rapport au regroupement réalisé sur le ensemble d'échantillons, le regroupement est réalisé sur le sous-ensemble avec différents algorithmes de regroupement ou avec différents paramètres de regroupement ou avec une combinaison de ceux-ci ; et

la répétition de l'étape de détermination (230) de la pureté et de la stratégie de post-traitement correspondante pour chacun des un ou plusieurs sous-groupes, pour mettre à jour les échantillons filtrés.

4. Procédé selon la revendication 1, dans lequel la détermination (210) de la représentation de caractéristiques comprend :
la détermination de valeurs de caractéristiques des échantillons compris dans l'ensemble d'échantillons dans un espace de caractéristiques prédéfini en tant que représentation de caractéristiques.

5. Procédé selon la revendication 4, comprenant en outre :

la détermination d'un sous-ensemble de l'ensemble d'échantillons, le sous-ensemble comprenant les échantillons filtrés obtenus à partir d'au moins un groupe associé à l'ensemble d'échantillons ; et

la réalisation d'un regroupement supplémentaire sur le sous-ensemble sur la base de la représentation de caractéristiques mise à jour pour obtenir un résultat du regroupement, le résultat du regroupement comprenant un ou plusieurs sous-groupes des échantillons compris dans le sous-ensemble, dans lequel, par rapport au regroupement réalisé sur l'ensemble d'échantillons, le regroupement est réalisé sur le sous-ensemble avec différents algorithmes de regroupement ou avec différents paramètres de regroupement ou avec une combinaison de ceux-ci ; et

la répétition de l'étape de détermination (230) de la pureté et de la stratégie de post-traitement correspondante pour chacun des un ou plusieurs sous-groupes, pour mettre à jour les échantillons filtrés.

6. Procédé selon l'une quelconque des revendications 1 à 5, dans lequel la détermination (230) de la pureté du groupe comprend :

la détermination du nombre d'échantillons de chaque catégorie pour le groupe ;
la détermination (550) d'un nombre maximal d'échantillons sur la base du nombre d'échantillons de chaque catégorie ; et

la détermination de la pureté sur la base du nombre maximal d'échantillons et d'un nombre total d'échantillons compris dans le groupe.

7. Dispositif de traitement d'échantillons, configuré pour exécuter un procédé de traitement d'échantillons selon l'une quelconque des revendications 1 à 6.

8. Support de stockage lisible par ordinateur sur lequel est stocké un programme informatique, dans lequel, lorsque le programme informatique est exécuté par un processeur, un procédé selon l'une quelconque des revendications 1 à 6 est exécuté.

FIG. 1

FIG. 2

FIG. 3

FIG. 4

500

510
**purity higher than purity threshold?**
NO
YES

520
**categories of samples same to each other**
NO
YES

530
determining samples included in the cluster as filtered samples

540
determining the number of samples of each category for the cluster

550
determining a maximal number of samples based on the number of samples of each category

560
determining samples of the target category as the filtered samples

570
determining a ratio of the number of samples in the cluster to the number of samples in the sample set

580
**the ratio exceeds a ratio threshold**
YES

590
performing the clustering on the samples in the cluster to obtain a result of the clustering

595
determining at least part of the samples in the cluster as the filtered samples at least based on the result of the clustering

FIG. 5

600

first representation
determining module —— 610

first clustering module —— 620

first purity determining
module —— 630

sample filtering module —— 640

FIG. 6

700

CPU 701        ROM 702        RAM 703

704

705

I/O interface

input unit 706    output unit 707    storage unit 708    communicatio n unit 709

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XU ET.** *Integrated patch model: A generative model for image categorization based on feature selection*

- **MARCHENKO YELIZAVETA.** *Semi-supervised annotation of brushwork in paintings domain using serial combinations of multiple experts*
- **JAIN ARPIT.** *Representing Videos Using Mid-Level Discriminative Patches*